# EUROPEAN PATENT SPECIFICATION

(11) **EP 0 665 819 B1**
(45) Date of publication and mention of the grant of the patent: **16.12.1998**
(21) Application number: 93922459.8
(22) Date of filing: 07.10.1993
(51) Int. Cl.: C02F 3/30, C02F 1/78

(54) **ODOUR CONTROLLED WASTE WATER TREATMENT SYSTEM**
GERUCHLOSES SYSTEM ZUR ABWASSERBEHANDLUNG
SYSTEME DE TRAITEMENT D'EAUX USEES A INODORISATION

(30) Priority: 07.10.1992 AU PL5162/92
(43) Date of publication of application: 09.08.1995
(73) Proprietor: Ozkorp Pty Limited, Windsor (AU)
(72) Inventor: CORNISH, John, Gilbert, David, Castle Cove, NSW 2069 (AU); CORNISH, James, David, Castle Cove,NSW 2069 (AU); BLACKMAN, Robert, James, Bligh Park, NSW 2756 (AU)
(74) Representative: Shaw, Laurence
(86) International application number: AU9300519
(87) International publication number: WO9407802

(56) References cited:
- AU-A- 2 082 392
- FR-A- 2 290 223
- FR-A- 2 478 947
- US-A- 3 666 106
- US-A- 3 850 801
- US-A- 5 096 577
- Water Treatment Handbook, Volume 2, Sixth Edition, 1991 (Degremont, France) Lavoisier Publishing Inc., page 884, page 888.
- PATENT ABSTRACTS OF JAPAN, M77, page 7079; & JP,A,52 131 653 (KUBOTA TEKKO K.K.) 4 November 1977 (04.11.77), Abstract.
- PATENT ABSTRACTS OF JAPAN, M77, page 8089; & JP,A,52 154 254 (MATSUSHITA DENKO K.K.) 21 December 1977 (21.12.77), Abstract.
- PATENT ABSTRACTS OF JAPAN, C528, page 45; & JP,A,63 100 999 (TAKUMA PLANT K.K.) 6 May 1988 (06.05.88), Abstract.
- PATENT ABSTRACTS OF JAPAN, C993, page 43; & JP,A,04 176 390 (ISHIKAWAJIMA HARIMA HEAVY IND CO LTD) 24 June 1992 (24.06.92), Abstract.

## Description

### TECHNICAL FIELD

The present invention relates to waste water treatment systems, where waste water will hereinafter be taken to include within its meaning water combined with solid waste or particulate matter such as in the form of a slurry.

### BACKGROUND ART

The invention has been developed primarily for use in the treatment of sewage and domestic effluent and will be described hereinafter with reference to this application. However, it will be appreciated that the invention is not limited to this particular field of use and is also suitable for treating industrial waste, storm water and effluent from farm animal enclosures, hotels and the like.

Current common domestic waste treatment comes in three forms: sewerage, septic or bio-organic. Sewerage is installed at domestic locations and connected to government controlled sewerage treatment and disposal systems which handle all water and waste outflow. Septic systems are connected to individual domestic structures where sewerage is not available, and are generally designed to handle single house units. These systems need to be pumped out on a regular basis and provide no form of recycling. Bio-organic systems are similar to septic systems except that the waste is treated organically and chemically and the resultant product may be used to irrigate an area of approved dimensions in a prescribed manner.

The bio-organic systems are highly desirable in that they require less maintenance than septic systems and permit a degree of recycling of the waste. Whilst a number of bio-organic systems are currently available, these systems suffer from several inherent disadvantages.

A first of these disadvantages is that although pump-out frequency is reduced over septic systems, this still needs to be done regularly due to the build up of sludge that accumulates with use.

Another major disadvantage relates to the fact that the prior art systems do not contain any effective odour control mechanisms. This places a limitation on the proximity with which the units can be placed relative to dwellings and the like, making the option of using such systems undesirable or even unacceptable in some situations.

Also of considerable importance is the size and corresponding efficiency of the currently available systems which inhibits their use in many applications.

Another disadvantage is that the majority of these bio-organic systems use chlorine as the final disinfectant. The chlorine product used contains a number of heavy metals and other products as stabilising agents. Also not all of the free chlorine is used in the sterilisation process. The end result is an output that has a high concentration of chemicals and compounds that are not environmentally friendly.

In US-A-3666106 is disclosed a septic tank unit comprising three interconnected tanks wherein waste material is subjected to anaerobic treatment in a first tank and then to aerobic treatment in a second tank and then is transferred to a third tank where it may be treated with, for example, ultra violet light and/or sodium hypochlorite.

It is an object of the present invention to provide a waste water treatment system that overcomes or at least ameliorates one or more of the above discussed disadvantages of the prior art.

### DISCLOSURE OF THE INVENTION

According to a first aspect of the invention there is provided an odour controlled waste water treatment system comprising, a tank having at least three processing chambers including, a first chamber for anaerobic treatment of the waste including therein an inlet to receive said untreated waste, a second chamber for aerobic treatment of the product from the first chamber and a third chamber for sterilisation of the product of the second chamber and characterised in that each chamber is provided with a respective head space and that there are provided means to prevent back flow of liquid and gas from said second chamber to said first chamber, means to admit air into said second head space, means to extract air from said second head space to generate and deliver ozone to the waste product in said third chamber and means to extract substantially deodorised gas from said third head space.

Preferably, back flow of liquid and gas from the second chamber to the first chamber is prevented by interconnecting these chambers by a submerged transfer passage and ensuring the pressure in the second head space is maintained at a level equal to or less than the pressure in the first head space.

In one embodiment, this is achieved by admission of air via a first one-way valve to the first head space and selectively permitting egress of air from that first head space into the second head space via an intermediate second one-way valve. In this way extraction of air from the second chamber for use in the ozone generation, reduces the pressure in the second head space, causing the second one-way valve to open and admit air from the first chamber. This one-way flow similarly causes a reduction in pressure in the first head space which causes additional replenishing air to be drawn into the first head space via the first one-way valve.

It is further preferred that means are provided to deliver air to the waste product in the second chamber for aerobic treatment thereof, desirably said treatment air also being extracted at least in part from the second head space and/or the first headspace.

In a preferred form the second chamber also includes separating baffle means to divide the second chamber into two separate first and second liquid/slurry sub-chambers to permit partial clarification of the waste by settlement, the second of said sub-chambers preferably including a bacteriological gravel filter.

Desirably, the second and third chambers are also interconnected by means of a submerged transfer passage.

It is preferred that the third chamber also includes separating baffle means to divide the third chamber into two separate third and fourth liquid/slurry sub-chambers to permit further clarification of the waste by settlement prior to extraction from the system. Preferably ozone is delivered to both sub-chambers of the third chamber.

Desirably, waste water flow between the pairs of liquid sub-chambers defined above is over, or through an upper portion of, each of said separating baffle means.

Preferably, the deodorised gas extraction means also includes additional filtration means.

Desirably, the treated waste is extracted from the fourth sub-chamber by means of a pump, air preferably being admitted to the third head space during pump out by bi-directional flow through the gas extraction means.

The system preferably includes a plurality of baffles spaced along all or a portion of said flow path to define a plurality of discrete chambers or sub-chambers, said chambers being serially inter-connected by transfer ducts generally alternately located adjacent a lower portion and then an upper portion of each chamber so as to create a substantially sinusoidal flow of waste water through said discrete chambers along said portion of the flow path.

Desirably, the baffle spacing and waste water flow rate are selected to ensure sufficient turbulence along said portion of the path to inhibit excessive deposition of sludge and substantially avoid stratification of bacteria type within the waste water travelling therethrough.

Desirably, the first chamber of the preferred embodiment of the invention is divided by means of spaced apart baffles into a plurality of serially interconnected sub-chambers wherein, more preferably, flow of said waste through said sub-chambers is substantially sinusoidal, passing over or through an upper portion of a first baffle and under or through a lower portion of the next baffle in a repetitive manner, prior to passing into the second chamber. It is further desired that the flow through the remaining chambers and sub-chambers is also substantially sinusoidal.

In a preferred embodiment the first, second and third chambers are vertically co-extensive and substantially co-axial, the first chamber being substantially annular and surrounding the second chamber which is similarly substantially annular and surrounding the substantially cylindrical third chamber. In this manner the flow is preferably circumferentially sinusoidal in the first chamber and desirably also radially sinusoidal between the subsequent chambers and sub-chambers.

### BRIEF DESCRIPTION OF THE DRAWINGS

Two preferred embodiments of the invention will now be described by way of example only, with reference to the accompanying drawings in which:
Figure 1 is a schematic sectional side view of a first preferred embodiment of the treatment system according to the invention, sectioned in a manner that illustrates the flow paths intermediate the chambers and sub-chambers.
Figure 2 is a schematic sectional plan view of the treatment system shown in Figure 1, similarly sectioned to illustrate the liquid flow paths intermediate the chambers and sub-chambers;
Figure 3 is a schematic sectional side view of the first chamber shown in the previous two Figures, illustrating the flow path therethrough in accordance with the second aspect of the invention;
Figure 4 is a schematic sectional part side view of the treatment system shown in Figures 1 and 2 illustrating the air/gas flow through the processing chambers;
Figure 5 is a schematic plan view of the system further illustrating the air/gas flow through processing chambers 3 and 4;
Figure 6 is a schematic sectional side view of a second embodiment treatment system according to the invention specifically adapted for treating storm water or rivers and the like.
Figure 7 is a schematic plan view of the inlet of the system shown in Figure 6; and
Figure 8 is a schematic end view of the inlet of the system shown in Figure 6.

### BEST MODE FOR CARRYING OUT THE INVENTION

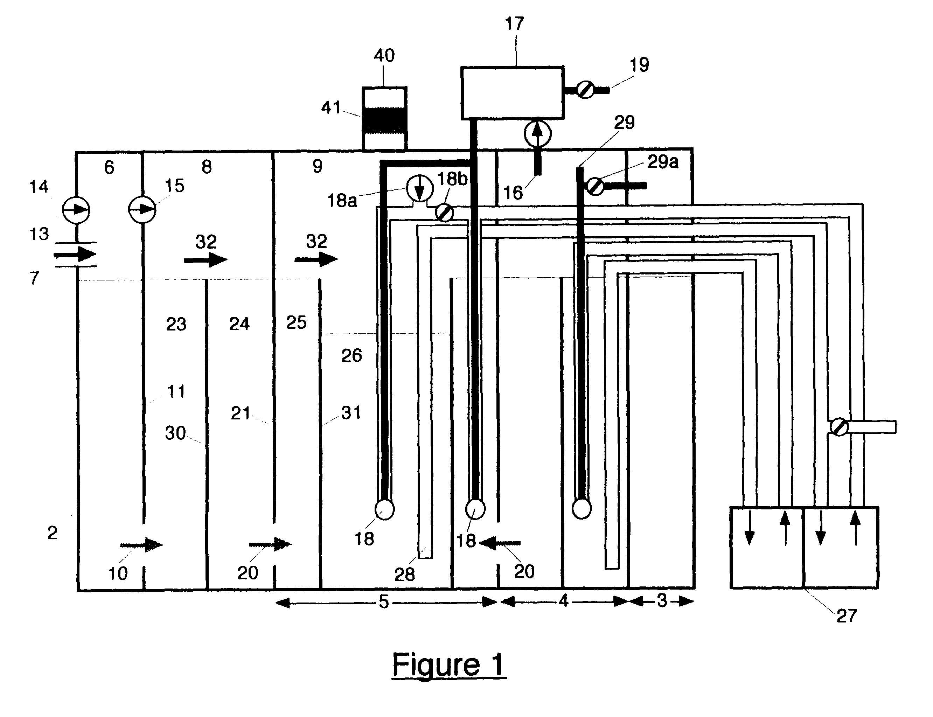

Referring first to Figures 1 to 5, the system 1 includes a tank 2 having three general processing chambers 3, 4 and 5 that are, in the preferred form illustrated, vertically co-extensive and substantially co-axial to define a series of nested annular chambers around a cylindrical core chamber.

The first outer annular chamber 3 includes a first head space 6 and an inlet 7 to receive the untreated waste. The second chamber 4 similarly includes a second head space 8 and the third chamber 5 a corresponding third head space 9.

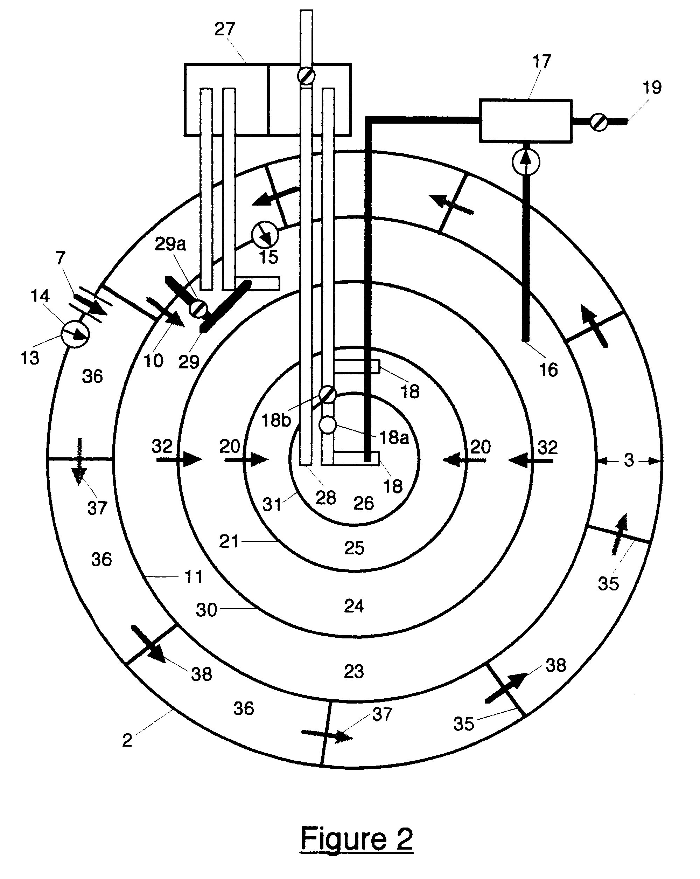

The first and second chambers are interconnected for liquid/slurry transfer therebetween by means of a submerged transfer duct 10 provided in a lower portion of a cylindrical partition 11 that separates the two chambers. In Figures 1 and 2 the lower transfer ducts are indicated by shaded arrows and the upper transfer ducts by solid arrows.

Also connected to the first chamber is an air inlet 13, the air inlet preferably including a first one-way valve 14 to prevent backflow of air through the inlet. Means to admit air to the second head space 8 is provided in the form of second one-way valve 15. This valve 15 is disposed in an upper portion of the partition 11 separating the first and second chambers and permits air flow from the first head space 6 to the second head space 8.

Connected to the second head space 8 by means of a one-way intake 16, is an ozone generator 17, which includes means to deliver ozone to the waste in third chamber 5 in the form of two ozone diffusers 18. The diffusers may comprise a series of micro-venturis which minimise the size of the ozone bubbles thereby maximising the surface area available for sterilisation.

In the preferred form, the duct connecting the two diffusers includes a one-way valve 18a to admit air to the duct to prevent syphoning of incompletely treated waste from sub-chamber 25 to final sub-chamber 26. A gate valve 18b is also provided in that duct such that delivery of ozone to final sub-chamber 26 is optional.

The second and third chambers 4 and 5 are also interconnected for liquid/slurry transfer therebetween by means of one or more submerged passages 20 provided in a lower portion of a cylindrical partition 21 that separates the two chambers.

The second and third chambers are each in this preferred embodiment divided into two distinct liquid/slurry sub-chambers. The second chamber 4 includes a first annular sub-chamber 23 adjacent the first chamber 3 for aerobic treatment of the waste and a subsequent second annular sub-chamber 24 for treatment and clarification of the waste by bacteriological gravel filtration.

Similarly, the third chamber 5 includes a third annular sub-chamber 25 adjacent the second sub-chamber 24 for clarification and/or sterilisation of the waste by settlement and/or ozone treatment and a fourth generally cylindrical sub-chamber 26 which may also include sterilisation by ozone treatment from which the final treated product is removed. Removal of the treated effluent is effected by means of a pump 27 connected to an extraction pipe 28.

The same extraction pump 27 is also used to deliver dissolved air to the first sub-chamber 23 for aerobic treatment of the waste therein. The pump 27 operates a vacuum venturi which causes air to be drawn in from the second head space 8 and/or the first head space 6 by means of an inlet arrangement 29 and delivered to the waste in sub-chamber 23 in micro bubbles formed via micro venturis (not shown). The inlet 29 includes a gate valve 29a to optionally block entrainment of air from the first headspace 6. These micro bubbles also assist in separating the suspended solids by selective floatation of the small particles, a technique known as dissolved air flotation. The operation of this technique will be discussed in more detail at a later stage.

The second and third chambers are preferably divided by respective cylindrical partition walls 30 and 31, waste flowing through transfer ducts 32 provided in an upper portion of or over walls 30 and 31 to transfer waste between adjacent sub-chambers.

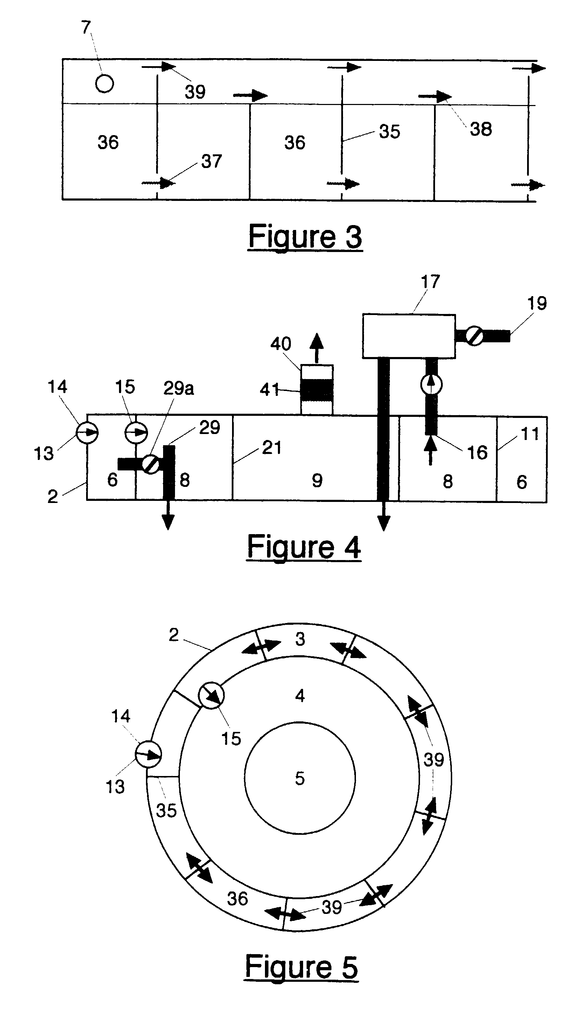

The first annular chamber 3 is circumferentially divided by means of radially extending baffles 35 into a plurality of serially interconnected sub-chambers 36 as shown schematically in Figures 2 and 3. The baffles are alternatively provided with transfer ducts 38 in an upper portion and transfer ducts 37 in a lower portion. Vent passages 39 are also provided in the upper portion of those alternate baffles having lower transfer ducts 37. The direction of waste flow in this first chamber is thereby substantially sinusoidal in a circumferential direction. The direction of air/gas flow through chamber 3 is best shown in Figure 5 where double arrows indicate two-way flow and single arrows indicate the provision of one-way valves.

The preferred embodiment has been modelled to achieve a flow rate compatible with allocating approximately 36% of the total treatment time to the anaerobic treatment process in chamber 3. The terminal baffle contains an upper transfer duct to ensure that the second aerobic treatment chamber 4 is filled under the influence of gravity through the lower transfer ducts 10 in a similar manner to a plumbing "U"-bend. This lower transfer duct system maintains the gaseous separation of chamber 3 from chamber 4 contributing to the operation of the odour elimination cycle described later in more detail. Furthermore, the subsequent transfer through the upper duct formed by the gap above wall 30 followed by transfer through the lower duct 20 in wall 21, then over dividing wall 31, results in a flow pattern in chambers 4 and 5 that is substantially sinusoidal in a generally radially inward direction.

Turning finally to the centre chamber, an air outlet 40 is also connected with head space 9 that includes, in the preferred form shown, an in-line carbon filter unit 41.

In use, sewage is directed via the inlet 7 into the first sub-chamber 36' of the processing chamber 3. Once this chamber is filled, the waste pours through a lower transfer duct 37 in the first baffle 35 and into the adjacent sub-chamber 36. Once more, as that sub-chamber fills, waste is passed through the upper transfer duct 38 provided in the subsequent baffle 35. In another embodiment the waste may be transferred from the first sub-chamber 36' by first passing through an upper transfer duct rather than a lower duct.

In this manner the sub-chambers 36 are progressively filled in an anti-clockwise direction as shown in Figure 2. The resulting sinusoidal flow through respective lower and upper transfer ducts provided in adjacent baffles results in sufficient turbulence to avoid stratification of the bacteria types, assists breakdown of solids by agitation and yet permits controlled progressive settlement of the contents. The system also provides sufficient residence time for effective anaerobic digestion to occur by the various mechanisms well-known to those skilled in the art.

The sinusoidal flow arrangement ensures that all the waste must traverse the full depth of its current sub-chamber before proceeding to the next, to assure a uniform waste quality at the beginning of each subsequent treatment stage. The upper transfer ducts 38 act to clarify the waste by settlement of the solids, the size of particles transferred to the next sub-chamber being dependent on the current flow rate of the system. Larger particles are thereby retained in a sub-chamber for further breakdown such that the residence time is varied according to need. The lower transfer ducts 37 promote even sludge deposition and hence expose a greater surface area upon which bacteria can act.

It should be noted that the embodiment illustrated is designed for the southern hemisphere and promotes anti-clockwise flow which is assisted by the coriolis effect. Alternate embodiments adapted for use in the northern hemisphere desirably promote rotation in a clockwise direction for the same reason.

When the waste reaches the final sub-chamber 36 adjacent the inlet, the waste transfers into the first sub-chamber 23 via the submerged passages 10 provided in the cylindrical partition 11 that separates the two main chambers. A sludge return facility (not shown) is also provided that periodically returns sludge accumulations in the final sub-chamber 36 to the adjacent inlet chamber for re-digestion.

The sub-chamber 23 is filled under gravity in a similar manner to a U-tube or plumbing U-bend. The pressure in the first and second head spaces is equalised by entraining air from the first head space 6 through the second one-way valve 15 to the second head space 8 as air is withdrawn from the second head space to aerate sub-chamber 23 and ozone generator 17. This passage of air from the first head space to the second head space similarly causes reduced pressure in the first head space causing entrainment of additional fresh air through the one-way valve 14 of the air inlet 13.

The waste product continues to fill the sub-chamber 23 until it reaches a level whereby waste flows through upper transfer ducts 32 provided in the annular partition wall 30 and into the second sub-chamber 24. In this manner there is partial settlement of the waste in sub-chamber 23 with predominantly liquid waste passing through the upper transfer ducts 32 into sub-chamber 24.

Sub-chamber 24 includes a bacteriological gravel filter which in a preferred form consists of "pebbles" which are largest at the bottom of the chamber and decrease in size towards the top of the chamber, the waste coating the pebbles as the chamber fills. In other embodiments the filter may comprise pebbles of the same size or varying size that are randomly mixed. Detailed operation of this filter is discussed at a later stage.

As sub-chamber 24 fills waste simultaneously begins to fill sub-chamber 25 by passing through the lower passages 20 provided in a lower portion of a partition wall 21 separating the two adjacent chambers.

In the embodiment illustrated, ozone is admitted to the waste in sub-chambers 25 and 26 of chamber 5 by means of the ozone diffuser 18 comprising micro-venturis connected with the ozone generator 17.

The air intake 16 to the ozone generator 17 extracts air from the second head space 8, thereby simultaneously deodorising the air and gas which is passed back into the waste in the form of ozone. Additional air can also be provided to the ozone generator from an external source 19 if required. The cylindrical partition wall 21 separating sub-chambers 24 and 25, prevents ozone in sub-chamber 25 from contaminating the waste undergoing aerobic treatment in chambers 23 and 24 and thereby destroying the bacteria important to those aerobic digestion processes.

It should be noted that the lower submerged passages 10 and 20 are disposed a spaced distance from the base of the tank 2 to allow partial settlement of particulate matter before waste is transferred between chambers and to ensure that the passages do not become blocked by sludge build up.

Finally, as sub-chambers 24 and 25 fill, further settlement occurs in chamber 25, with the fully treated waste then passing over partition wall 31 and into the final central cylindrical sub-chamber 26. The waste is then ozone treated again to ensure a residual ozone level in the final product at that time, to prevent viral or bacterial contamination of the water before it is pumped out.

The treated waste is then withdrawn via pump 27 through extraction pipe 28 for subsequent use in irrigation processes and the like, the short half-life of ozone ensuring that any residual ozone in the final effluent decomposes to simple molecular oxygen on use. As the treated waste is withdrawn, pressure equalisation in the third chamber 5 is facilitated in one embodiment by the bi-directional gas flow capabilities of the vent system 40/41 which permits air to enter the third head space 9.

This final sub-chamber 26 is provided with upper and lower water level sensors, the pump being actuated automatically once the higher level is reached and shutting off when the fluid level drops to the lower level.

Finally, residual air or gas present in the third head space 9 as a result of the ozone treatment within that chamber passes out through air outlet 40 through the in-line carbon filter unit 41. The filter acts as a final cleaning stage for the air which will have been in any event substantially purified and deodorised by being passed through the ozone generator 17.

Operation of the anaerobic sinusoidal flow system, the aerobic treatment using the dissolved air floatation system and the bacteriological gravel filtration system will now each be discussed in more detail, commencing with the sinusoidal flow arrangement.

Generally, for domestic type waste, a minimum of two days anaerobic treatment is required to achieve adequate digestion. However, it will be appreciated that total residence times and volumes etc will vary according to the application.

It appears the optimal flow rate for chamber 3 of the tested domestic prototype unit requires a change over of inter-baffle contents 2 to 3 times in a 24 hour period. This is to maintain an adequate level of turbulence which is necessary for the reasons previously stated. Calculations for these flow rates were based on an average daily waste input of approximately 450 litres every 24 hour period from a household of 5 people. It follows that to achieve a flow rate within the required range the inter-baffle volume must be between 150 and 225 litres.

Modelling of these baffle spacing requirements on a domestic scale prototype version of the system (based on a household of 5 people) which would have an approximate volume of 3,800 litres, remembering that the anaerobic process encompasses 36% of the total treatment time, means that a total number of 9 baffles would result in an inter-baffle volume of approximately 160 litres and a mean circumferential inter-baffle spacing of approximately 0.63 metres. This would result in a turnover of the inter-baffle contents approximately 2.8 to 3 times in a 24 hour period.

This number of baffles has been chosen (i.e. 9 as opposed to 7) to set the inter-baffle volume at the lower end of the appropriate range and consequently elevate the rate of inter-baffle turnover to provide an adequate environment for the anaerobic treatment process.

Turning next to the aerobic treatment stage, the waste water treatment system of the preferred embodiment preferably utilises the dissolved air floatation system previously described in three of its five treatment chambers i.e. in the aerobic chamber 23 and the two ozonation chambers 25 and 26.

The air is dissolved into the waste water via the venturis so as to form micro air bubbles. These air bubbles attach to suspended solids in the water with which they come into contact. The number of air bubbles which attach to a particle depends on the surface area of the particle, therefore, relative to mass, more bubbles attach to smaller particles - this is because smaller particles have a higher surface area to mass ratio than do larger particles.

When a sufficient number of air bubbles have attached to a particle it floats to the surface of the water. This dissolved air flotation system results in a layer of "foam" forming on the surface of the treated water. This foam contains all the suspended solids which have been extracted from the waste water in a convenient form for subsequent breakdown.

The preferred embodiment also utilises an intermittent aeration cycle to optimise the biological removal of phosphorus, ammonia and nitrates from the waste by providing periods of vigorous aeration followed by relative periods of anoxia.

Finally, we consider in more detail the bacteriological gravel filter system preferably used in sub-chamber 24.

Breakdown by certain bacteria types is inhibited by their inability to "trap" particles suspended in solution. Solids suspended in the contents of the aerobic chamber are taken out of solution by the dissolved air flotation system previously discussed. The foam which forms as a result of that system is then transferred to lie over the entrance to the gravel filter in sub-chamber 24. As the foam over the gravel filter dissipates, the solid particles are allowed to fall back onto solution. The gravel filter then provides an optimal environment for waste breakdown by bacteria which require a surface against which they can trap and breakdown suspended particles.

To this end bacterial colonies become established, coating the surface of the pebbles, creating a "bio-slime". Particles suspended in solution collide with the surface of the pebbles becoming entrapped. In this environment the particles are exposed to concentrated bacterial digestion resulting in their breakdown.

The bacteriological gravel filter of the household sized unit provides a surface area equivalent to approximately 5 acres providing an ideal environment for bacterial growth and entrapment. In addition the gravel filter also traps larger waste particles via the mechanism of a conventional filter system. It is unlikely that larger waste will manage to access this level of the system due to the sinusoidal flow system and the efficiency of the anaerobic and aerobic steps performed in chambers 3 and 23. However, if present, these larger particles are then subjected to prolonged bacterial exposure in the filter resulting in their breakdown.

The preferred first embodiment described utilises a single pump to operate the aeration and ozone injection systems and pump out the treated effluent making the overall design very cost efficient. Whilst it would be possible to have the same pump returning any sludge accumulation for re-digestion, the use of a small submersible pump for this purpose is preferred.

The final treated product has a purity level that approaches that achieved by conventional tertiary processing and is well suited for irrigation purposes and it may also be possible to use the treated water for other household applications.

An advantage of using ozone, other than enabling simultaneous deodorising of the system and being able to produce the sterilising agent in situ, is that unlike chlorine, the end product contains no residual heavy metals or other contaminants that may have been added as stabilisers.

The effectiveness of the system is assisted, with regards to treatment of the liquid, by the substantially sinusoidal flow paths within the system. The resulting flow characteristics allow agitation to break down solids, repeated settlement to assist clarification of the waste and ensure adequate residence time for the various biological processes to occur. Furthermore, ozone is a very powerful sterilising agent that is very effective in disinfecting the waste.

In terms of the air and gas flow through the system, it can be seen that air is discharged or vented at one point only, having been entrained through the various processing stages including the ozone treatment, where it is substantially deodorised by the oxidation process that occurs therein.

The preferred embodiment described is positively vented. More specifically air is induced into the system by negative pressure created by withdrawing air to feed the dissolved air injection system and ozone generator 17. The air is ultimately expelled under positive pressure after the final treatment stage by the passage of air and ozone through the treatment chambers causing the used deodorised air to vent through the final air outlet 40.

A number of tests have been conducted on a prototype unit made in accordance with the preferred embodiment described that is treating domestic and industrial waste, the latest preliminary results of which are listed below.

| TEST 1 | | |
|---|---|---|
| PARAMETER | RAW INFLUENT | FINAL PRODUCT |
| | (07/09/93) | (14/09/93) |
| Ammonia (as N) [mg/l] | 22 | 0.4 |
| B.O.D. (5) | 250 | 6 |
| Phosphorous (total) [mg/l] | 12 | 8.6 |
| Suspended Solids [mg/l] | 180 | 8 |
| Total Kjeldahl Nitrogen [mg/l] | 30 | 2 |

By way of comparison, samples taken from a conventional bio-organic system operating under optimal conditions and analysed by the same laboratories revealed Total Nitrogen of 10, Ammonia of 1.3 and Suspended Solids between 12 and 21. These results are significantly higher than those of the system according to the invention and directly reflect the superior aspects of the design and operation of the present system.

Furthermore, the results tabulated above fall well within the limits set by the NSW Health Department for an aerated septic tank system i.e. 20 BOD, 30 Suspended Solids.

In addition these latest results (with the exception of phosphorus) also meet the published licensing requirements, set by the Environmental Protection Authority, for the Quaker's Hill Tertiary Treatment Plant - this plant is acknowledged as having one of the more strict licenses due to the plants efficiency. The license states that:
- Suspended solids must be below 10 for 50% of the time and below 15 for 90% of the time.
- BOD must be below 10 for 50% of the time and below 15 for 90% of the time.
- Phosphorus must be below 1.5 for 50% of the time and below 3 for 90% of the time.
- Ammonia must be below 1 for 50% of the time and below 2 for 90% of the time.
- Total Nitrogen must be below 10 for 50% of the time and below 15 for 90% of the time.

It is believed that the poor results obtained at this stage with regard to phosphorus are due partly to the high phosphorus content of the industrial influent component as compared to domestic waste. Improved results are being obtained, the general trend indicating that it will be possible to meet or exceed the licensing requirements above once operation of the system has been optimised.

In other embodiments made in accordance with the first aspect of the invention, the number of fluid treatment sub-chambers varies according to the application. Similarly, ozone addition to the waste in sub-chamber 26 is merely optional.

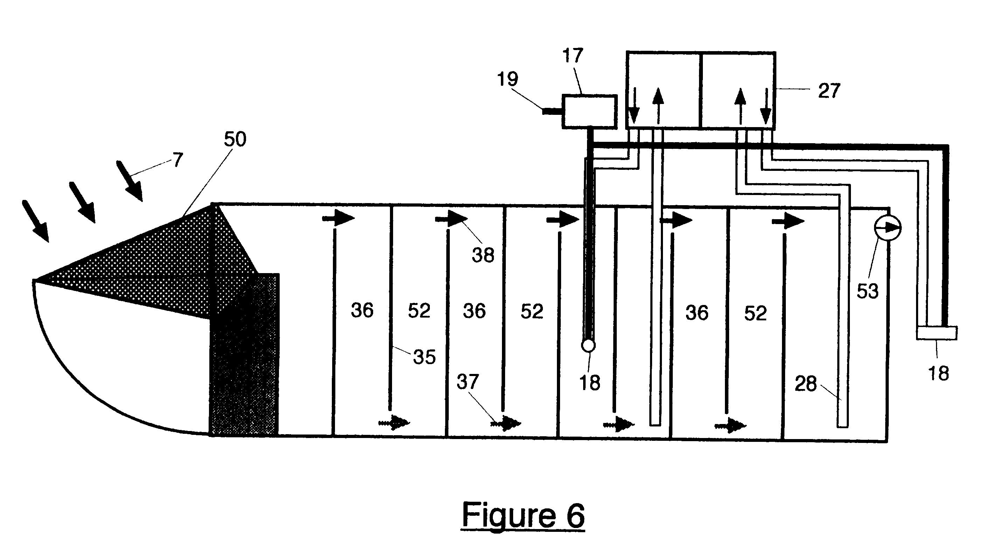

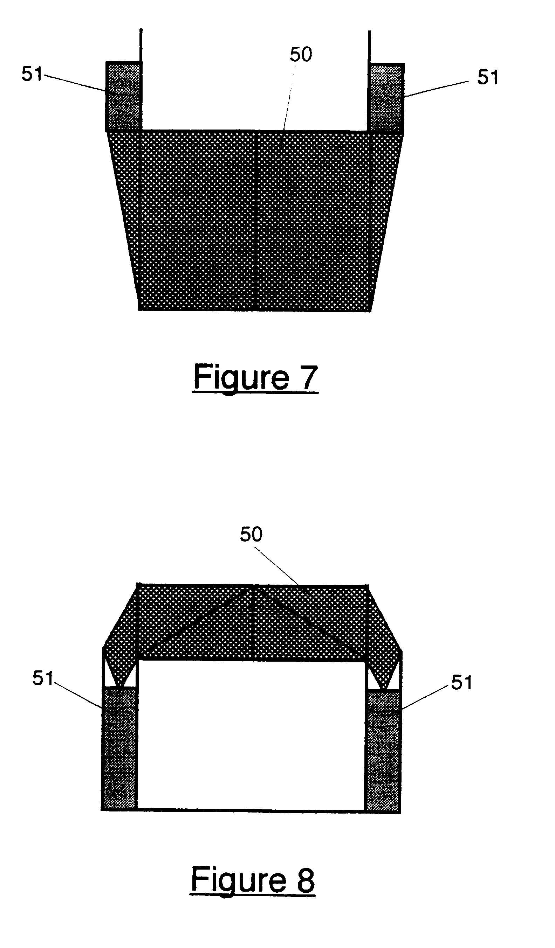

Referring next to Figures 6 to 8 there is shown an alternative embodiment made substantially in accordance with the second aspect of the invention that has been proposed for the treatment of river water and storm water and the like. Where possible, like reference numerals have been used to denote corresponding features.

This simplified system uses the sinusoidal flow arrangement of the second aspect, as also illustrated in Figure 3, to remove particulate solids, in combination with one or more ozone sterilisation stages. A mesh screen 50 is also preferably provided at the inlet in accordance with the usual practice as a filter to prevent flotsam entering the system. The inlet also desirably includes catchment bins 51 for collecting the debris diverted by the screen 50.

The system also may include one or more gravel filtration stages such as shown at 52 depending on the degree of bacteriological digestion needed. Where the flow rates through the system are high, it may be preferable to put the gravel in chambers that have a lower in-feed duct (as shown) so that gravel is not washed through to the next chamber.

In the embodiment illustrated, the water enters the inlet 7, the flotsam being diverted to catchment bins 51 by the screen 50. The water then passes through a series of interconnected chambers in a substantially sinusoidal manner as illustrated. Passage through the chamber in this manner will help clarify the waste and prevent stratification of bacteria type for effective subsequent treatment with ozone on discharge from the system and, optionally, at a point within the system as shown.

At the first ozonation stage water from the adjacent down stream chamber is pumped to the previous chamber to induce the ozone via the preferred micro-venturi diffusers 18. The final treated effluent is extracted via the pump 27 and ozonated on discharge. Where flow rates exceed the pump capacity, a one-way valve 53 permits discharge of the excess from the system.

Another advantage of the system is that by using an integral ozone generator in both embodiments as a primary sterilisation process, it will require much less power to operate than many of the prior art systems, particularly if the ozone generator is solar powered.

Another major advantage is that the effectiveness of the process means that the system will require less maintenance. It is anticipated that the first embodiment system according to the invention will require pumping out of residue much less often than was previously the case and may even be as infrequent as once every 7-10 years. Furthermore, there is no substantial floating scum build-up that requires removal as with the prior art systems as the majority of scum created is fully digested in the bacteriological gravel filtration stage.

Whilst the invention has been described with reference to specific examples, it will be appreciated by those skilled in the art that the invention may be embodied in many other forms.

## Claims

1. An odour controlled waste water treatment system (1) comprising, a tank (2) having at least three processing chambers including, a first chamber (3) for anaerobic treatment of the waste including therein an inlet (7) to receive said untreated waste, a second chamber (4) for aerobic treatment of the product from the first chamber (3) and a third chamber (5) for sterilisation of the product of the second chamber (4) and **characterised in that** each chamber (3,4,5) is provided with a respective head space (6,8,9), and that there are provided means (10) to prevent back flow of liquid and gas from said second chamber (4) to said first chamber (3), means (15) to admit air into said second head space (8), means (16) to extract air from said second head space (8) to generate and deliver ozone to the waste product in said third chamber (5), and means (40,41) to extract substantially deodorised gas from said third head space (9).

2. A system according to Claim 1, wherein back flow of liquid and gas from the second chamber (4) to the first chamber (3) is prevented by interconnecting these chambers by a submerged liquid transfer passage (16) and ensuring that the gaseous pressure in the second head space (8) is maintained at a level equal to or less than the pressure in the first head space (6).

3. A system according to Claim 2, wherein the first head space (6) includes a one-way valve (14) for admitting external atmospheric air thereto, a second one-way valve (15) being provided intermediate the first (6) and second (8) head space such that extraction of air from the second head space (8) for use in the ozone generation reduces the pressure in the second head space (8) causing the second one-way valve (15) to open and admit air from the first chamber (3) which in turn causes a reduction in pressure in the first head space (6) which causes additional replenishing air to be drawn into the first head space (6) via the first one-way valve (14).

4. A system according to Claim 1, 2 or 3, including means (27) to deliver air to the waste water in the second chamber (4) for aerobic treatment thereof and at least a part of said treatment air is extracted from the second head space (8) and/or the first headspace (6).

5. A system according to Claim 4, wherein the air is delivered to the waste in the form of micro bubbles by means of micro venturi.

6. A system according to any one of the preceding Claims, wherein the air is admitted to the second chamber (4) intermittently to promote periods of vigorous aeration followed by periods of relative anoxia.

7. A system according to any of the preceding Claims, wherein the second chamber (4) includes separating baffle means (30) to divide the second chamber (4) into two separate first (23) and second (24) liquid/slurry sub-chambers to permit partial clarification of the waste by settlement.

8. A system according to Claim 7, wherein said second chamber (4) or at least one of said sub-chambers (23, 24) in said second chamber (4) includes a bacteriological gravel filter.

9. A system according to any one of the preceding Claims, wherein the second (4) and third (5) chambers are interconnected by means of at least one submerged transfer passage (20).

10. A system according to any one of the preceding Claims, wherein the third chamber (5) includes separating baffle means (31) to divide the third chamber (5) into two separate third (25) and fourth (26) liquid/slurry sub-chambers to permit further clarification of the waste by settlement.

11. A system according to Claim 10, wherein ozone is delivered to both the third (25) and fourth (26) sub-chambers of the third chamber.

12. A system according to any one of Claims 8 to 11, wherein the waste water flow between the respective pairs of liquid sub-chambers (23, 24 and 25, 26) is over, or through an upper portion of, the respective separating baffle means (30,31).

13. A system according to any one of the preceding Claims, wherein the treated waste water is extracted from the final treatment chamber (26) of the third chamber (5) by means of a pump (27) adapted to induce air to be used in the aeration and ozonation processes.

14. A system according to Claim 13. wherein air is admitted to the third head space (9) during pump out by bi-directional flow through the gas extraction means (40, 41).

15. A system according to any one of the preceding Claims, wherein the first chamber (3) is divided by means of spaced apart baffles (35) into a plurality of serially interconnected sub-chambers (36) wherein flow of waste water through said sub-chambers (36) is substantially sinusoidal, passing over or through an upper portion of a first baffle and under or through a lower portion of the next adjacent baffle in a repetitive manner.

16. A system according to Claim 15, wherein the flow rate through the first chamber (3) is designed to achieve a change over of sub-chamber (36) contents two to three times in a twenty-four hour period.

17. A system according to any one of the preceding Claims, wherein the residence time in the first anaerobic chamber (3) is designed to be approximately 36% of the total treatment time.

18. A system according to any one of the preceding Claims, wherein waste flow between said first chamber (3) and subsequent chambers (4. 5) and sub-chambers (23, 24 and 25, 26) also defines a generally sinusoidal flow path.

19. A system according to any one of the preceding Claims wherein the first (3), second (4) and third (5) chambers are vertically co-extensive and substantially co-axial.

20. A system according to any one of the preceding Claims, including means to return sludge accumulation in the first chamber adjacent the entry to the second chamber to the adjacent entry of the first chamber for re-processing.

21. A system according to Claim 1, further characterised by the system being divided by baffles (35) to form a series of discrete sub-chambers (36, 37, 38) and being serially interconnected by transfer ducts generally alternately located adjacent a lower portion and then an upper portion of each chamber so as to create a substantially sinusoidal flow of waste water through said discrete chambers (36) along said portion of the flow path.

22. A system according to Claim 21, wherein means (17) are included to deliver ozone to the third chamber (5) for sterilisation of the waste product therein.

23. A system according to Claim 22, wherein air is extracted from the second head space (8) to generate and deliver ozone to the waste product in the third chamber (5).

## Patentansprüche

1. Geruchgesteuertes Abwasseraufbereitungssystem (1), aufweisend einen Tank (2) mit zumindest drei Verarbeitungskammern, einschließlich einer ersten Kammer (3) zur anaerobischen Aufbereitung des Abfalls bzw. Abwassers, enthaltend einen Einlaß (7) zum Empfangen des nicht-aufbereiteten Abfalls, einer zweiten Kammer (4) zur aerobischen Aufbereitung des Produkts von der ersten Kammer (3) und einer dritten Kammer (5) zur Sterilisation des Produkts der zweiten Kammer (4), dadurch gekennzeichnet, daß jede Kammer (3, 4, 5) mit einem jeweiligen Kopfraum (6, 8, 9) versehen, ist, und daß Mittel (10) vorgesehen sind, um Flüssigkeits- und Gasrückfluß von der zweiten Kammer (4) zur ersten Kammer (3) zu unterbinden, Mittel (15) zum Zuströmenlassen von Luft in den zweiten Kopfraum (8), Mittel (16) zum Extrahieren von Luft aus dem zweiten Kopfraum (8) zum Erzeugen und Fördern von Ozon zu dem Abfallprodukt in der dritten Kammer (5), und Mittel (40, 41) zum Extrahieren im wesentlichen geruchslos gemachten Gases aus dem dritten Kopfraum (9).

2. System nach Anspruch 1, wobei der Flüssigkeits- und Gasrückfluß von der zweiten Kammer (4) zu der ersten Kammer (3) unterbunden wird, indem diese Kammern miteinander durch einen untergetauchten Flüssigkeitsüberführungsdurchlaß (16) verbunden werden, und indem sichergestellt wird, daß der Gasdruck in dem zweiten Kopfraum (8) auf einer Höhe gleich oder geringer als der Druck in dem ersten Kopfraum (6) gehalten wird.

3. System nach Anspruch 2, wobei der erste Kopfraum (6) ein Einwegeventil (14) umfaßt, um in diesen externe Atmosphärenluft zuströmen zu lassen, ein zweites Einwegeventil (15), das zwischen dem ersten (6) und zweiten (8) Kopfraum derart vorgesehen ist, daß Luftextraktion aus dem zweiten Kopfraum (8) zur Verwendung bei der Ozonerzeugung den Druck in dem zweiten Kopfraum (8) reduziert, wodurch das zweite Einwegeventil (15) veranlaßt wird, sich zu öffnen und von der ersten Kammer (3) Luft zuströmen zu lassen, die ihrerseits eine Druckverringerung in dem ersten Kopfraum (6) verursacht, der zusätzliche Auffrischungsluft veranlaßt, in den ersten Kopfraum (6) über das erste Einwegeventil (14) gesaugt zu werden.

4. System nach Anspruch 1, 2 oder 3, umfassend eine Einrichtung (27) zum Fördern von Luft zu dem Abwasser in der zweiten Kammer (4) zu dessen aerobischer Aufbereitung, wobei zumindest ein Teil der Aufbereitungsluft von dem zweiten Kopfraum (8) und/oder dem ersten Kopfraum (6) extrahiert wird.

5. System nach Anspruch 4, wobei die Luft zu dem Abfall in Form von Mikrobläschen mittels eines Mikrolufttrichters gefördert wird.

6. System nach einem der vorangehenden Ansprüche, wobei Luft zu der zweiten Kammer (4) diskontinuierlich zuströmengelassen wird, um Perioden heftiger Lüftung gefolgt von Perioden relativer Anoxia zu fördern.

7. System nach einem der vorangehenden Ansprüche, wobei die zweite Kammer (4) Trennwandeinrichtungen (30) umfaßt, um die zweite Kammer (4) in zwei getrennte erste (23) und zweite (24) Flüssigkeits/Schlamm-Teilkammern zu unterteilen, um eine teilweise Klärung des Abfalls durch Absetzen zu erlauben.

8. System nach Anspruch 7, wobei die zweite Kammer (4) oder zumindest eine der Teilkammern (23, 24) in der zweiten Kammer (4) einen bakteriologischen Kiesfilter umfaßt.

9. System nach einem der vorangehenden Ansprüche, wobei die zweiten (4) und dritten (5) Kammern miteinander mittels zumindest eines untergetauchten Überführungsdurchlasses (20) verbunden sind.

10. System nach einem der vorangehenden Ansprüche, wobei die dritte Kammer (5) eine Trennwandeinrichtung (31) umfaßt, um die dritte Kammer (5) in zwei getrennte dritte (25) und vierte (26) Flüssigkeits/Schlamm-Teilkammern zu unterteilen, um eine zusätzliche Klärung des Abfalls durch Absetzen zu ermöglichen.

11. System nach Anspruch 10, wobei Ozon sowohl zu der dritten (25) wie der vierten (26) Teilkammer der dritten Kammer gefördert wird.

12. System nach einem der Ansprüche 8 bis 11, wobei der Abwasserstrom zwischen den jeweiligen Paaren von Flüssigkeitsteilkammern (23, 24 und 25, 26) über oder durch einen oberen Teil der jeweiligen Trennwandeinrichtung (30, 31) verläuft.

13. System nach einem der vorangehenden Ansprüche, wobei das aufbereitete Abwasser aus der letzten Aufbereitungskammer (26) der dritten Kammer (5) mittels einer Pumpe (27) extrahiert wird, die dazu ausgelegt ist, Luft einzuleiten, die in den Lüftungs- und Ozonierungsprozessen verwendet wird.

14. System nach Anspruch 13, wobei Luft zu dem dritten Kopfraum (9) während des Auspumpens durch eine bidirektionelle Strömung durch die Gasextraktionsmittel (40, 41) zuströmengelassen wird.

15. System nach einem der vorangehenden Ansprüche, wobei die erste Kammer (3) mittels voneinander beabstandeter Wände (35) in mehrere seriell miteinander verbundene Teilkammern (36) unterteilt ist, wobei eine Abwasserströmung durch die Teilkammern (36) im wesentlichen sinusförmig, über oder durch einen oberen Teil einer ersten Wand und unter oder durch einen unteren Teil der nächsten benachbarten Wand in wiederholter Weise verläuft.

16. System nach Anspruch 15, wobei die Durchflußrate durch die erste Kammer (3) dazu ausgelegt ist, einen Umschlag des Inhalts der Teilkammer (36) zwei- oder dreimal in einer 24-Stunden-Periode zu erzielen.

17. System nach einem der vorangehenden Ansprüche, wobei die Aufenthaltszeit in der ersten anaerobischen Kammer 3 dazu ausgelegt ist, ungefähr 36% der gesamten Aufbereitungszeit auszumachen.

18. System nach einem der vorangehenden Ansprüche, wobei die Abfall- bzw. Abwasserströmung zwischen der ersten Kammer (3) und den nachfolgenden Kammern (4, 5) und den Teilkammern (23, 24 und 25, 26) ebenfalls einen allgemeinen sinusförmigen Strömungspfad festlegt.

19. System nach einem der vorangehenden Ansprüche, wobei die ersten (3), zweiten (4) und dritten (5) Kammern sich in vertikaler Richtung gemeinsam erstrecken und im wesentlichen koaxial verlaufen.

20. System nach einem der vorangehenden Ansprüche, aufweisend ein Mittel zum Rückführen von Schlammansammlung in der ersten Kammer benachbart zum Einlaß der zweiten Kammer zu einem benachbarten Einlaß der ersten Kammer zur Wiederaufbereitung.

21. System nach Anspruch 1, außerdem dadurch gekennzeichnet, daß das System durch Wände (25) unterteilt ist, um eine Reihe von diskreten Teilkammern (36, 37, 38) zu bilden, die seriell miteinander durch Überführungskanäle verbunden sind, die allgemein abwechselnd benachbart zu einem unteren Teil und daraufhin einem oberen Teil jeder Kammer angeordnet sind, um eine im wesentlichen sinusförmige Abwasserströmung durch die diskreten Kammern (36) entlang dem Teil des Strömungspfads zu erzeugen.

22. System nach Anspruch 21, wobei die Mittel (17) vorgesehen sind, um Ozon zu der dritten Kammer (5) zur Sterilisation des Abfallprodukts in dieser zu fördern.

23. System nach Anspruch 22, wobei Luft aus dem zweiten Kopfraum (8) extrahiert wird, um Ozon zu erzeugen und zu dem Abfallprodukt in der dritten Kammer (5) zu fördern.

## Revendications

1. Système de traitement des eaux usées (1) tout en contrôlant les odeurs comprenant un réservoir (2) ayant au moins trois chambres de traitement comprenant une première chambre (3) pour le traitement anaérobie des déchets comportant un orifice d'admission (7) destiné à recevoir lesdits déchets non traités, une deuxième chambre (5) pour la stérilisation du produit de la deuxième chambre (4) pour le traitement aérobie du produit à partir de la première chambre (3) et une troisième chambre (4) et caractérise en ce que chaque chambre (3, 4, 5) est munie d'un espace libre respectif (6, 8, 9) et en ce que des moyens (10) sont fournis pour empêcher le reflux des liquides et des gaz de la deuxième chambre (4) vers ladite première chambre (3), des moyens (15) pour introduire de l'air dans ledit deuxième espace libre (8), des moyens (16) pour extraire l'air dudit deuxième espace libre (8) afin de générer et de délivrer de l'ozone au produit usé dans ladite troisième chambre (5), et des moyens (40, 41) pour extraire les gaz sensiblement désodorisés dudit troisième espace libre (9).

2. Système selon la revendication 1, dans lequel le reflux de liquides et de gaz de la deuxième chambre (4) vers la première chambre (3) est empêché par l'interconnexion de ces chambres par un passage de transfert de liquides immergé (16) et en assurant que la pression des gaz dans le deuxième espace libre (8) soit maintenu à un niveau égal ou inférieur à la pression régnant dans le premier espace libre (6).

3. Système selon la revendication 2, dans lequel le premier espace libre (6) comprend une vanne unidirectionnelle (14) pour y faire entrer de l'air atmosphérique extérieur, une seconde vanne unidirectionnelle (15) étant prévue entre le premier (6) et le deuxième (8) espace libre de sorte que l'extraction de l'air du deuxième espace libre (8) afin d'être utilisé pour la génération d'ozone réduit la pression dans le deuxième espace libre (8), ce qui entraîne l'ouverture de la seconde vanne unidirectionnelle (15) et l'entrée de l'air provenant de la première chambre (3) qui à son tour entraîne une réduction de pression dans le premier espace libre (6) qui provoque l'aspiration de l'air de renouvellement supplémentaire dans le premier espace libre (6) par l'intermédiaire de la première vanne unidirectionnelle (14).

4. Système selon la revendication 1, 2 ou 3, comprenant des moyens (27) pour délivrer de l'air dans les eaux usées contenues dans la deuxième chambre (4) pour que celles-ci subissent un traitement aérobie et au moins une partie dudit air de traitement est extrait du deuxième espace libre (8) et/ou du premier espace libre (6).

5. Système selon la revendication 4, dans lequel l'air est délivré dans les déchets sous la forme de micro-bulles au moyen d'un micro-venturi.

6. Système selon l'une quelconque des revendications précédentes, dans lequel de l'air est admis dans la deuxième chambre (4) par intermittence pour favoriser des périodes de forte aération suivies de périodes d'anoxie relative.

7. Système selon l'une quelconque ces revendications précédentes, dans lequel la deuxième chambre (4) comprend des moyens de chicane de séparation (30) pour diviser la deuxième chambre (4) en deux première (23) et seconde (24) sous-chambres à liquides/boues séparées afin de permettre une clarification partielle des déchets par dépôt.

8. Système selon la revendication 7, dans lequel ladite deuxième chambre (4) ou au moins l'une desdites sous-chambres (23, 24) dans ladite deuxième chambre (4) comprend un filtre à gravier bactériologique.

9. Système selon l'une quelconque des revendications précédentes, dans lequel les deuxième (4) et troisième (5) chambres sont reliées entre elles au moyen d'au moins un passage de transfert immergé (20).

10. Système selon l'une quelconque des revendications précédentes, dans lequel la troisième chambre (5) comprend des moyens de chicane de séparation (31) pour diviser la troisième chambre (5) en deux troisième (25) et quatrième (26) sous-chambres à liquides/boues afin de permettre une clarification plus poussée des déchets par dépôt.

11. Système selon la revendication 10, dans lequel de l'ozone est délivré à la fois aux troisième (25) et quatrième (26) sous-chambres de la troisième chambre.

12. Système selon l'une quelconque des revendications 8 à 11, dans lequel le flux d'eaux usées entre les paires respectives de sous-chambres à liquides (23, 24 et 25, 26) est sur ou dans une partie supérieure des moyens de chicane de séparation (30, 31).

13. Système selon l'une quelconque des revendications précédentes, dans lequel les eaux usées traitées sont extraites de la chambre de traitement final (26) de la troisième chambre (5) au moyen d'une pompe (27) adaptée pour induire de l'air devant être utilisé dans les processus d'aération et d'ozonisation.

14. Système selon la revendication 13, dans lequel de l'air est admis dans le troisième espace libre (9) pendant le pompage par le flux bidirectionnel par les moyens d'extraction des gaz (40, 41).

15. Système selon l'une quelconque des revendications précédentes, dans lequel la première chambre (3) est divisée au moyen de chicanes (35) espacées en une pluralité de sous-chambres (36) reliées entre elles en série, dans lesquelles le flux des eaux usées traversant lesdites sous-chambres (36) est sensiblement sinusoïdal, dépassant ou traversant une partie supérieure d'une première chicane et passant sous ou à travers une partie inférieure de la chicane adjacente qui suit de manière répétée.

16. Système selon la revendication 15, dans lequel le débit dans la première chambre (3) est conçu pour réaliser un changement du contenu des sous-chambres (36) deux ou trois fois par 24 heures.

17. Système selon l'une quelconque des revendications précédentes, dans lequel le temps de séjour dans la première chambre anaérobie (3) est prévu pour représenter 36 % du temps total de traitement.

18. Système selon l'une quelconque des revendications précédentes, dans lequel le flux de déchets entre ladite première chambre (3) et les chambres suivantes (4, 5) ainsi que les sous-chambres (23, 24 et 25, 26) définit une trajectoire d'écoulement sensiblement sinusoïdale.

19. Système selon l'une quelconque des revendications précédentes, dans lequel les première (3), deuxième (4) et troisième (5) chambres s'étendent conjointement verticalement et sont sensiblement coaxiales.

20. Système selon l'une quelconque des revendications précédentes, comprenant des moyens pour renvoyer l'accumulation de boues dans la première chambre adjacente à la deuxième chambre et à l'entrée adjacente de la première chambre pour un nouveau traitement.

21. Système selon la revendication 1, caractérisé en outre en ce que le système est divisé par des chicanes (35) pour former une série de sous-chambres discrètes (36, 37, 38) qui soient reliées mutuellement par des conduits de transfert globalement en alternance situés à proximité d'une partie inférieure et ensuite d'une partie supérieure de chaque chambre afin de générer un flux sensiblement sinusoïdal d'eaux usées dans lesdites chambres discrètes (36) le long de ladite partie de la trajectoire du flux.

22. Système selon la revendication 21, dans lequel des moyens (17) sont inclus pour délivrer de l'ozone à la troisième chambre (5) pour y stériliser le produit usé.

23. Système selon la revendication 22, dans lequel de l'air est extrait du deuxième espace libre (8) pour générer et délivrer de l'ozone dans le produit usé dans la troisième chambre (5).
